# EUROPEAN PATENT APPLICATION

(11) **EP 0 787 925 A2**
(43) Date of publication of application: **06.08.1997**
(21) Application number: 97300501.0
(22) Date of filing: 27.01.1997
(51) Int. Cl.: F16F 15/14, F16F 15/131

(54) **A torsional vibration damper**

(30) Priority: 31.01.1996 GB 9601895
(71) Applicant: HOLSET ENGINEERING COMPANY LIMITED, Huddersfield, HD1 6RA (GB)
(72) Inventor: Bunting, Anthony, Huddersfield, W. Yorks, HD2 SDL (GB)
(74) Representative: Every, David Aidan

(57) **Abstract**

A torsional vibration damper particularly for the engine of a ship comprises a housing having walls defining an annular channel in which an inertia member is rotatably received. An annular bearing (15) is positioned between said inertia member (8) and a wall (12,13) of said channel, and an annular bearing support of hardened metal between the annular bearing and said wall of said channel. An annular groove (17) is provided in the inertia member (8) for receipt of an annular axial thrust bearing (15) when the damper is serviced. Fixing bores to which lifting apparatus can be secured to remove the inertia member (8) during service are provided. The inertia member (8) has a plurality of countersunk bores so that axial thrust bearing pads may be fitted when servicing. In certain applications the inertia member comprises a plurality of separable coaxial annular elements. The inertia member is removed during service by attaching lifting tackle to the fixing bores and sliding it on to a plurality of shoes removably fixed to the housing.

## Description

The present invention relates to a torsional vibration damper and more particularly, but not exclusively to such a damper used to limit the torsional vibrations of a ship's engine.

Torsional vibration dampers are used to limit the torsional vibrations that occur in a crankshaft of an internal combustion engine. Such dampers generally comprise an annular inertia member disposed within an annular chamber defined by a housing. Space between walls of the chamber and the inertia member is filled with viscous damping fluid and the resistance to shear of the fluid provides a damping effect when the crankshaft rotates.

One known large scale torsional vibration damper used on a ship's engine has annular bronze bearings fixed in recesses in an inner diameter face of the inertia member. The bearings run on a bearing support surface defined by a wall of the annular chamber and provide both axial and radial resistance. Large scale dampers of this kind are periodically serviced in-situ to have the viscous damper fluid changed and worn bearings replaced. Often the bearing support surface race is also worn as a result of attrition with small fragments of metal from the bearings or the housing present in the viscous damping fluid. Such fragments may become embedded in the bearing or support surface surfaces and cause further wear. A worn housing has to be re-machined off ship to ensure the support surface is smooth. It will be appreciated that since a damper of this kind can be in excess of 2m in diameter its removal from the ship is a major task requiring significant time, effort, and manpower. Often alteration to the ship's structure is necessary to create an access area of the appropriate size so that the damper can be removed. A ship's on-board lifting crane can generally manage dampers of up to around 8 tonnes. Dampers in excess of this weight have to be removed using on-shore lifting tackle.

Once the housing has been re-machined replacement bearings for the inertia member have to be manufactured specifically to fit the new housing dimensions.

It is an object of the present invention to obviate or mitigate the aforesaid disadvantages.

According to a first aspect of the present invention there is provided a torsional vibration damper having an axis of rotation, the damper comprising a housing having walls defining an annular channel in which an inertia member is rotatably received and an annular bearing between said inertia member and a wall of said channel, wherein there is provided an annular bearing support of wear-resistant material between the annular bearing and said wall of said channel.

The provision of the wear-resistant annular bearing support reduces the tendency of the bearing and housing to wear and shed metal fragments. Furthermore, any fragments that may be present in the chamber are not likely to become embedded in the surface of the race.

Preferably the wear-resistant material is a hardened metal.

The annular bearing may conveniently provide resistance to both radial and axial loads.

Preferably the inertia member has an annular groove radially outward of said annular bearing and designed for receipt of an annular thrust bearing. The groove is preferably formed in a radially extending face of the inertia member.

There may also be provided a plurality of thrust bearing pads. The pads are preferably made from polytetrafluoroethene and comprise a disc with a projecting shank. The inertia member preferably has angularly spaced bores in which said pads are fitted.

Preferably the inertia member has a fixing bore to which lifting apparatus may be connected to remove the inertial member from the housing. Preferably there is provided an axially extending fixing bore in a radially extending face of the inertia member. There may also be provided a radially extending fixing bore in an axially extending outer face of the inertia member.

In one embodiment of the first aspect of the present invention the inertia member comprises a plurality of separable coaxial annular elements. The elements are preferably releasably connected together by a common axial bolt. Preferably each annular element has a bearing which bears against a respective wear-resistant bearing support, a radial and an axial fixing bore and an annular groove for an axial thrust bearing.

Each annular element may also have at least one polytetrafluoroethene pad.

According to a second aspect of the present invention there is provided a torsional vibration damper having an axis of rotation, the damper comprising a housing having walls defining an annular channel in which an inertia member is rotatably received and a bearing between said inertia member and a wall of said channel, wherein the inertia member has an annular groove radially outward of said annular bearing and designed for receipt of an annular thrust bearing.

When the damper is to be serviced an annular thrust bearing may simply be fitted in the annular groove.

According to a third aspect of the present invention there is provided a torsional vibration damper having an axis of rotation, the damper comprising a housing having walls defining an annular channel in which an inertia member is rotatably received and a bearing between said inertia member and a wall of said channel, wherein there is provided a fixing bore to which lifting apparatus can be secured in order to remove the inertia member.

According to a fourth aspect of the present invention there is provided a torsional vibration damper having an axis of rotation, the damper comprising a housing having walls defining an annular channel in which an inertia member is rotatably received and a bearing between said inertia member and a wall of said channel, wherein the inertia member comprises a plurality of separable coaxial annular elements.

The provision of a separable annular element enables the inertia member to be removed element by element which is particularly advantageous when the total weight of the damper exceeds the available lifting capacity.

According to a fifth aspect of the present invention there is provided a method of removing an inertia member from a torsion vibration damper having an axis of rotation, the damper comprising a housing having walls defining an annular channel in which the inertia member is rotatably received and a bearing between said inertia member and a wall of said channel, the inertia member having a fixing bore for connection to extraction apparatus, the method comprising the steps of:
a) fixing a support platform to the housing adjacent said channel;
b) connecting the extraction apparatus to the fixing bore;
c) using the extraction apparatus to slide the inertia member on to the platform so that it is supported during removal;
d) removing the inertia member fully from the channel.

Preferably the channel is closeable by a cover plate which is removed to expose the annular channel before connecting the support platform.

Preferably the inertia member has an axial fixing bore in a radially extending face of the inertia member to which the extraction apparatus is connected.

Preferably the inertia member has a radial fixing bore in its axially extending outer face.

The method may further comprise the steps of connecting lifting tackle to the radial fixing bore after the inertia member has be slid partially on to the platform.

Preferably there are a plurality of axially spaced radial fixing bores which are each connected to the lifting tackle in sequence as the inertia member is moved in an axial direction.

Preferably the platform is a plurality of separate arcuate shoes

A specific embodiment of the present invention will now be described, by way of example only, with reference to the accompanying drawings in which:
Figure 1 is a sectioned view taken along a radial line of half of a torsional vibration damper in accordance with the present invention;
Figure 2 is a plan view of part of an inertia member of the present invention;
Figure 3 is a scrap sectioned view taken along line X-X of figure 2;
Figure 4 is a scrap sectioned view showing detail of a thrust pad bore of the damper of figure 1;
Figure 5 is a view according to figure 1 with a cover plate removed and a shoe attached;
Figure 6 is a sectioned view taken along a radial line of half of a torsional vibration damper in accordance with a second embodiment of the present invention.

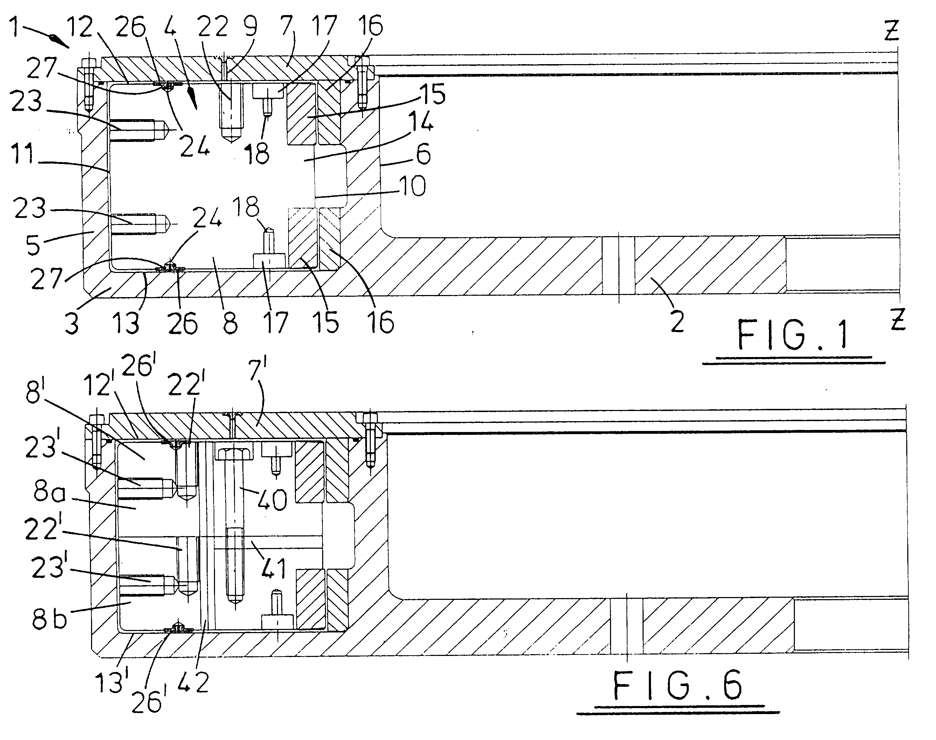

Referring now to the drawings, figure 1 shows a torsional vibration damper having a central rotational axis Z. The damper comprises a housing assembly 1 having a central hub 2 by which the damper is attached to a crankshaft (not shown) of an engine.

The housing assembly 1 comprises a single piece annular case 3 with an annular channel 4 defined at its periphery by means of spaced, concentric, axially extending walls 5, 6. The channel 4 is closed by an annular cover plate 7 bolted to the walls 5, 6 and rotably receives an annular inertia member 8. Space between the walls 5, 6 and coverplate 7 of the enclosed channel and the inertia member 8 is filled by viscous damping fluid. The cover plate 7 has a damping fluid draining bore 9 which is plugged when the damper is in use.

The annular inertia member 8 is generally rectangular in cross section having radially inner and outer faces 10, 11 and axially opposed side faces 12, 13. The radially inner face is centrally stepped as indicated by reference number 14. On each side of the central step 14 an annular bearing 15 is shrunk fit on to the inertia member 8. Facing each bearing 15 is a corresponding annular bearing support plate 16 fixed to the radially innermost channel wall 6. The bearing support plates 16 are made from hardened steel to provide a bearing surface with wear resistance and are axially spaced by a distance equivalent to the width of the central step 14.

In some embodiments (not shown) the side faces 12, 13 have tapered clearances at their outer diameter to allow for slight angulation of the inertia member 8 which may occur when the bearings 15 are worn. This avoids metal-to-metal contact between the inertia member and casing.

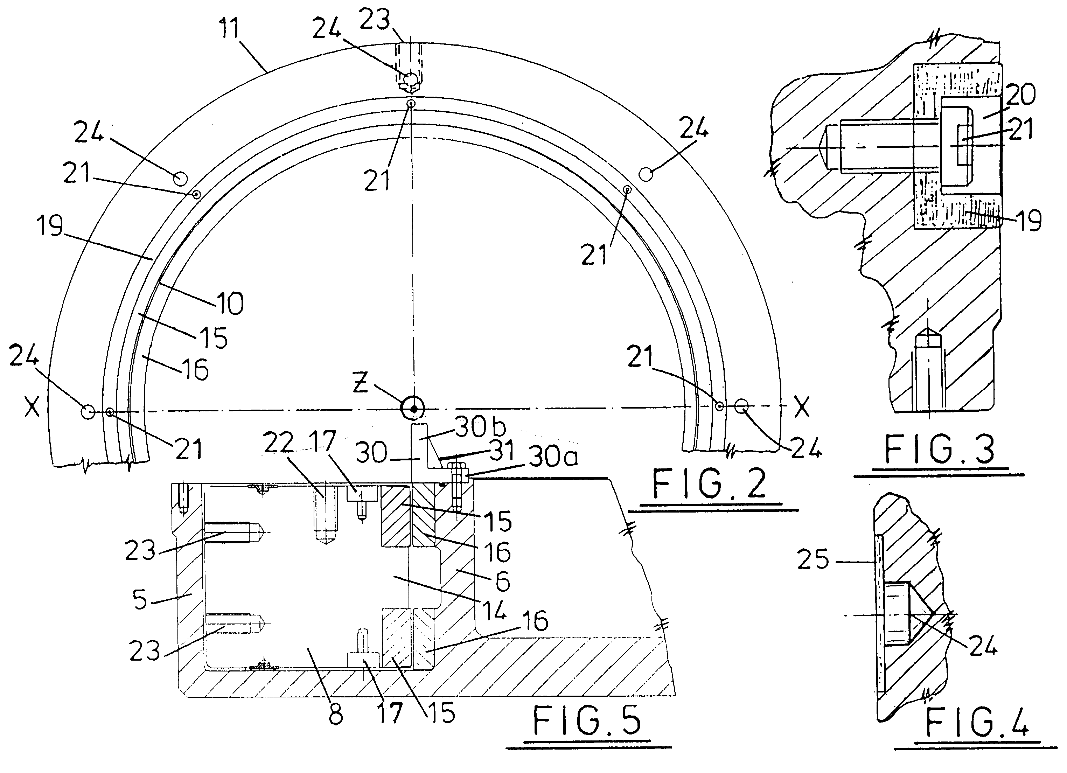

In figure 1 the annular inertia member is shown with annular grooves 17 in its opposed side faces 12, 13. The grooves 17 are provided with equi-angularly spaced threaded fixing bores 18 and may each receive an annular thrust bearing 19 as can be seen more clearly from figures 2 and 3. Each annular thrust bearing 19 has countersunk bores 20 corresponding to the fixing bores 18 in the annular groove 17 of inertia member 8 and receives fixing bolts 21 by which it is held therein.

Radially outward of the annular groove 17 on the side face 12 adjacent the cover plate 7 are two diametrically opposed blind threaded bores 22 (one only shown in figure 1 and none shown in figure 2). Two pairs of similar fixing bores 23 are provided in diametric opposition in the radially outer face 11 of the annular member; the bores 23 of each pair being axially spaced (one bore of each pair shown in figure 1 and one bore only shown in figure 2). Blind apertures 24 are provided at equi-angular positions around the inertia member 8 in radial alignment with and radially outward of the blind threaded bores 18 in the annular grooves 17. Each blind aperture 24 has a shallow countersink 25 to receive a polytetrafluoroethene pad 26 as can be seen more clearly in figure 4. The pad 26 has a projecting central shank 27 which locates in the corresponding blind aperture 24. The innermost ring shown in figure 2 represents the bearing plate 16 which is not fitted to the inertia member.

When the torsional vibration damper is initially fitted the annular thrust bearings 19 and the polytetrafluoroethene pads 26 are not present. In use, the bearings 15 provide both radial and axial thrust resistance.

When the damper requires servicing, the fluid draining bore 9 in the cover plate 7 is unplugged so that the viscous damping fluid can be drained. The cover plate 7 is then removed to provide access to the annular inertia member 8. At the top centre of the damper a thin strip of polytetraflouroethene (ptfe) material (not shown) is inserted between the radially outermost surface 11 of the inertia member 8 and the adjacent channel wall 5. The strip covers the axial width of the inertia member 8. The damper is then rotated about 180° until the strip of ptfe is at the bottom. A plurality of arcuate shoes 30 (one shown in figure 5) are then fixed to the inner wall 6 of the annular channel 4. The shoes 30, essentially L-shaped in cross-section with a strengthening web 31, are bolted to inner wall 6 using the bores to which the cover plate 7 was fixed. When fitted one limb 30a of each shoe 30 overlies an edge of the inner channel wall 6 and a side edge of a bearing support plate 16 so that the other limb 30b is co-terminous with the working surface of the bearing support plate 16. The latter limb 30b is used as a platform during the removal of the annular inertia member 8.

Axial jacking equipment is connected to the exposed blind bores 22. The inertia member 8 is slid axially by the jacking equipment until the first blind bores 23 in the radially outermost surface are exposed. During the sliding movement the ptfe strip maintains a clearance between the inertia member 8 and the casing channel 4. When the first radial blind bores 23 are exposed one of the annular bearings 15 is supported by shoes 30. The exposed radial blind bores 23 are then connected to lifting tackle or an on-board ship's crane and the inertia member 8 is moved further axially until the central step 14 defined on the radially inner surface 10 of the inertia member 8 rests on the shoes 30 and the second blind bores 23 in the radially outermost surface are exposed. The bores 23 are then connected to the lifting tackle and the annular inertia member 8 can be wholly removed and lashed to a suitable upright structure in the engine room of the ship. Once removed the inertia member 8 can be serviced by removing the old bearings 15 and replacing them with premachined replacement bearings (not shown). The replacement bearings are narrower axially than the previous bearings so that they do not provide axial thrust resistance and are shrunk on to the inertia member using conventional techniques such as cooling with liquid nitrogen. At this stage annular thrust bearings 19 are fixed in the annular grooves 17 and the polytetrafluoroethene pads 26 are press-fitted into the blind apertures 24 as described above.

The serviced inertia member 8 is returned to the annular channel 4, the shoes 30 removed and the cover plate 7 re-attached. Fresh viscous damping fluid is introduced through the fluid draining bore 9 which is then plugged.

Figure 6 shows an alternative embodiment of the present invention in which the inertia member 8' is axially split into two halves 8a and 8b. The two halves are fixed together in use with central axially extending bolts 40. Each half of the inertia member has axial and radial blind bores 22', 23' for connection to the lifting tackle when required. This split inertia member 8' is used for dampers whose weight exceeds the lifting capacity of the on board lifting equipment. When serviced the inertia member halves 8a, 8b are removed one by one. The assembled inertia member 8' has radial fluid bores 41 extending radially outwards from the radially inner surface of the inertia member along approximately half its radial depth. Each radial fluid bore 41 meets a corresponding axially extending through bore 42. During rotation the damper bores 42, 43 convey the viscous damping fluid axially outwards to the side faces 12', 13' of the inertia member 8' to provide improved damping. The replacement bearings provide no axial thrust resistance, this being provided instead by the annular thrust bearing 19' and eventually the polytetrafluoroethene pads 26' should the former wear. The provision of secondary thrust bearings in the form of the annular axial thrust bearing 19' and the pads 26' obviates the need to re-machine thrust bearings, a worn face of the cover plate 7' or the opposing surface of the housing 1'.

It will be appreciated that the above described torsional vibration damper is relatively easy to service in comparison with previous designs since servicing can be performed without removing the damper from the ship's engine room or indeed removing its housing from the engine crankshaft and that once serviced in the manner described the various design features give the damper prolonged life.

In particular, wear caused by the annular bearings 15 is reduced in the radial direction by the bearing supports 16. Furthermore, by replacing the existing annular bearings 15 with bearings which do not provide axial thrust resistance and adding separate axial thrust bearings 19 and/or thrust pads 26 the axial wear is transferred to a different part of the housing eliminating the need for re-machining.

## Claims

1. A torsional vibration damper having an axis of rotation, the damper comprising a housing having walls defining an annular channel in which an inertia member is rotatably received and an annular bearing between said inertia member and a wall of said channel, wherein there is provided an annular bearing support of wear-resistant material between the annular bearing and said wall of said channel.

2. A torsional vibration damper according to claim 1, wherein the wear-resistant material is a hardened metal.

3. A torsional vibration damper according to claim 1 or 2, wherein the inertia member has an annular groove radially outward of said annular bearing and designed for receipt of an annular axial thrust bearing.

4. A torsional vibration damper according to claim 3, wherein the annular groove is formed in a radially extending face of the inertia member.

5. A torsional vibration damper according to claim 3 or 4, wherein there is an annular axial thrust bearing fitted in said annular groove.

6. A torsional vibration damper according to any preceding claim, wherein the inertia member has a plurality of countersunk bores designed to receive axial thrust bearing pads.

7. A torsional vibration damper according to claim 6, wherein the inertia member has axial thrust bearing pads fitted in said countersunk bores.

8. A torsional vibration damper according to claim 7, wherein each pad comprises a disc of bearing material with a projecting threaded fixing shank.

9. A torsional vibration damper according to claim 6,7 or 8, wherein the pads are angularly spaced around a radially extending face of the inertia member.

10. A torsional vibration damper according to any one of claims 6 to 9, wherein the pads are made from polytetrafluoroethene.

11. A torsional vibration damper according to any preceding claim, wherein the inertia member has a fixing bore to which extraction apparatus may be connected to remove the inertia member from the housing.

12. A torsional vibration damper according to claim 11, wherein there is provided an axially extending fixing bore in a radially extending face of the inertia member.

13. A torsional vibration damper according to claim 11 or 12, wherein there is provided a radially extending fixing bore in an axially extending outer face of the inertia member.

14. A torsional vibration damper according to any preceding claim, in which the inertia member comprises a plurality of separable coaxial annular elements.

15. A torsional vibration damper according to claim 14, wherein the elements are releasably connected together by a common axial bolt.

16. A torsional vibration damper according to claim 14 or 15, wherein each annular element has an annular bearing which bears against a respective wear-resistant bearing support surface.

17. A torsional vibration damper according to any one of claims 14, 15 or 16, in which each annular element has a radial and an axial fixing bore.

18. A torsional vibration damper according to any one of claims 14, 15, 16 or 17, wherein each annular element has an annular groove radially outward of said annular bearing and designed for receipt of an axial thrust bearing.

19. A torsional vibration damper having an axis of rotation, the damper comprising a housing having walls defining an annular channel in which an inertia member is rotatably received and a bearing between said inertia member and a wall of said channel, wherein the inertia member has an annular groove radially outward of said annular bearing and designed for receipt of an annular axial thrust bearing.

20. A torsional vibration damper according to claim 19, wherein an annular axial thrust bearing is fitted in said annular groove.

21. A torsional vibration damper according to claim 19 or 20, wherein the annular groove is in a radially extending face of the inertia member.

22. A torsional vibration damper having an axis of rotation, the damper comprising a housing having walls defining an annular channel in which an inertia member is rotatably received and a bearing between said inertia member and a wall of said channel, wherein there is provided a fixing bore in said inertia member to which extraction apparatus can be secured to remove the inertia member.

23. A torsional vibration damper according to claim 22, wherein the fixing bore is axially extending in a radially extending face.

24. A torsional vibration damper according to claim 21, 22, or 23 wherein a fixing bore is provided on an axially extending outer face of the annular inertia member.

25. A torsional vibration damper according to claim 24, wherein a plurality of spaced radially extending fixing bores are provided on said axially extending outer face of the annular inertia member.

26. A torsional vibration damper having an axis of rotation, the damper comprising a housing having walls defining an annular channel in which an inertia member is rotatably received and an annular bearing between said inertia member and a wall of said channel, wherein the inertia member comprises a plurality of separable coaxial annular elements.

27. A torsional vibration damper according to claim 26, wherein the elements are releasably connected together by a common axial bolt.

28. A torsional vibration damper according to claim 26 or 27, wherein each annular element has an annular bearing which bears against a respective wear resistant bearing support surface.

29. A torsional vibration damper according to claim 26, 27 or 28, in which each annular element has a radial and an axial fixing bore.

30. A torsional vibration damper according to any one of claims 26 to 29, wherein each annular element has an annular groove radially outward of said annular bearing and designed for receipt of an axial thrust bearing.

31. A method of removing an inertia member from a torsion vibration damper having an axis of rotation, the damper comprising a housing having walls defining an annular channel in which the inertia member is rotatably received and a bearing between said inertia member and a wall of said channel, the inertia member having a fixing bore for receipt of extraction apparatus, the method comprising the steps of:
a) fixing a support platform to the housing adjacent said channel;
b) connecting the extraction apparatus to the fixing bore;
c) using the extraction apparatus to slide the inertia member on to the platform so that it is supported during removal;
d) removing the inertia member fully from the channel.

32. A method of removing an inertia member from a torsional vibration damper according to claim 31, wherein the channel is closeable by a cover plate which is removed before connecting the support platform to expose the annular channel.

33. A method of removing an inertia member according to claim 32, wherein the fixing bore to which the extraction apparatus is connected extends axially and is provided in a radially extending face of the inertia member.

34. A method of removing an inertia member according to claim 32 or 33, wherein the inertia member has a radial fixing bore in its axially extending outer face.

35. A method of removing an inertia member according to claim 34, further comprising the steps of connecting lifting tackle to the radial bore after the inertia member has be slid part way on to the platform.

36. A method of removing an inertia member according to claim 34 or 35, wherein there are a plurality of axially spaced radial fixing bores to each of which lifting tackle is connected.

37. A method of removing an inertia member according to any one of claims 31 to 36, wherein a spacer is inserted between the inertia member and a wall of said channel so that a clearance between the inertia member and the channel wall is maintained during removal.

38. A method of removing an inertia member according to claim 37, wherein the spacer comprises a strip of polytetraflouroethene material.

39. A method of removing an inertia member according to any preceding claim, wherein the extraction apparatus is axial jacking equipment.

40. A method of removing an inertia member according to any one of claims 31 to 39, wherein the platform comprises a plurality of separate arcuate shoes.

41. A torsional vibration damper substantially as hereinbefore described with reference to the accompanying drawings.

42. A method of removing an inertia member from a torsional vibration damper substantially as hereinbefore described with reference to the accompanying drawings.
